# EUROPEAN PATENT SPECIFICATION

(11) **EP 3 991 992 B1**
(45) Date of publication and mention of the grant of the patent: **24.12.2025**
(21) Application number: 21205311.0
(22) Date of filing: 28.10.2021
(51) Int. Cl.: B44C 1/10, B60B 7/00, B60R 13/04

(54) **METHOD OF DECORATING A VEHICLE WHEEL BY APPLYING A DECORATIVE APPLIQUE AND A POLYMERIC OVER-COATING**
VERFAHREN ZUR DEKORATION EINES FAHRZEUGRADES DURCH AUFBRINGEN EINER DEKORATIVEN APPLIKATION UND EINER POLYMEREN ÜBERBESCHICHTUNG
METHODE DE DECORATION D'UNE ROUE DE VEHICULE PAR APPLICATION D'UNE APPLIQUE DECORATIVE ET D'UN SUR-REVETEMENT POLYMERIQUE

(30) Priority: 29.10.2020 US 202063107152 P
(43) Date of publication of application: 04.05.2022
(73) Proprietor: Superior Industries International, Inc., Southfield, MI 48033 (US)
(72) Inventor: WATTS, Christopher Allen, Milford, MI, 48381 (US); CHENAULT III, Henry Clay, Fayetteville, AR, 72704 (US)
(74) Representative: Bardehle Pagenberg Partnerschaft mbB Patentanwälte Rechtsanwälte

(56) References cited:
- WO-A1-2021/041674
- DE-A1- 2 935 584
- US-A1- 2012 135 208
- US-A1- 2015 239 286
- US-A1- 2020 180 356

## Description

### TECHNICAL FIELD

The present invention relates generally toward application of decorative features to a vehicle component. More specifically, the present invention relates to a method of providing a vehicle wheel with a decorative applique.

### BACKGROUND

Ever increasing consumer desires with regard to customized passenger vehicles have caused vehicle manufacturers and their suppliers to identify unique distinguishing features. Vehicle wheels have not been exempted from these consumer desires. In addition, it is becoming increasingly desirable to include unique brand identifiers on, for example, vehicle wheels. Therefore, wheel manufacturers have been seeking different manufacturing techniques that provide distinguishing features including machining unique features into the wheel alloy, unique coating technologies and the addition of metallic layers.

Unique performance requirements of vehicle wheels have prevented additional distinguishing features, such as adhering appliques, in the form of brand identifiers and the like. Application of these items has not been attempted due to durability deficiencies when subject the rigors of, for example, dirt and gravel roads, road salt, and other environmental contaminants. However, there is a market desire to include distinguishing features on vehicle wheels that, to date, could only be provided by way of an applique. Therefore, there is a significant need to develop a process and technique for applying distinguishing features to a wheel that would enable application of unique brand identifiers to a wheel while still providing necessary durability and performance.

DE 29 35 584 A1 discloses a method of providing a vehicle part with a decorative applique and overcoating the applique with clear lacquer.

### SUMMARY

This need is fulfilled by the method of decorating a vehicle wheel as defined in independent claim 1.

Further advantageous features are described in the dependent claims and in the following description. A vehicle wheel is defined by a wheel substrate including a face and a rim portion. The face defines a plurality of spokes extending radially outwardly between a central portion defined by the face and the rim portion. An applique including a decorative feature that is distinguishable from the wheel is affixed to a mating portion of the wheel. A polymer over-coating is applied over the applique and the wheel that is substantially transparent covering the applique and the wheel defining a continuous polymer surface over the applique and the wheel substrate.

Significant efforts have been expended to develop polymeric coatings for wheels that are capable of withstanding environmental rigors of a wide range of road surfaces and other environmental factors. However, appliques and labels have not been capable of providing requisite durability when applied over these coatings. This problem is overcome by the invention of the present application. The inventive process of applying durable polymer coatings over the applique and the wheel after the applique has been adhered to a wheel provides the benefit of providing performance characteristics of the polymer coating while protecting the applique from known environmental contaminants. In addition, unique tinting, coloring and pigmenting techniques applied to the polymeric over-coating can provide additional unique appearance characteristics. For example, presenting a continuous polymer surface offers aesthetic characteristics previously not available to vehicle wheels. The continuous polymeric over-coating presents a same gloss level over both the applique and the wheel surface giving the appearance of the applique being part of the wheel substrate.

### BRIEF DESCRIPTION OF THE DRAWINGS

Other advantages of the present invention will be readily appreciated, as the same becomes better understood by reference to the following detailed description when considered in connection with the accompanying drawings, wherein:
Figure 1 shows a partial perspective view of a wheel including a decorative applique;
Figure 2A shows a cross-section of a wheel with a decorative applique;
Figure 2B shows a cross-section of a first embodiment of the wheel of the present invention with the decorative applique adhered to a second intermediate polymeric coating;
Figure 3A shows a cross-section of a different wheel with a decorative applique;
Figure 3B shows a cross-section of a variation of the wheel in Figure 3A;
Figure 4A shows a cross-section of another wheel with a decorative applique;
Figure 4B shows a cross-section of a variation of the wheel in Figure 4A;
Figure 5A shows a cross-section of a further wheel with a decorative applique;
Figure 5B shows a cross-section of a variation of the wheel in Figure 5A;
Figure 6A shows a cross-section of another wheel with a decorative applique;
Figure 6B shows a cross-section of a second embodiment of the wheel of the present invention with the decorative applique adhered to the second intermediate polymeric coating;
Figure 7A shows a cross-section of a different wheel with a decorative applique;
Figure 7B shows a cross-section of a variation of the wheel in Figure 7A;
Figure 8A shows a cross-section of another wheel with a decorative applique;
Figure 8B shows a cross-section of a third embodiment of the wheel of the present invention with the decorative applique adhered to the second intermediate polymeric coating;
Figure 9A shows a cross-section of a further wheel with a decorative applique;
Figure 9B shows a cross-section of a variation of the wheel in Figure 9A;
Figure 10 shows a partial perspective view of a wheel including an alternative applique providing a textured appearance;
Figure 11 shows a partial perspective view of an applique disposed in a recessed portion of a face of the wheel;
Figure 12 shows a cross-section through line 12-12 of Figure 11; and
Figure 13 shows a flow chart of a process for manufacturing a wheel as it may be used in connection with the present invention.

### DETAILED DESCRIPTION

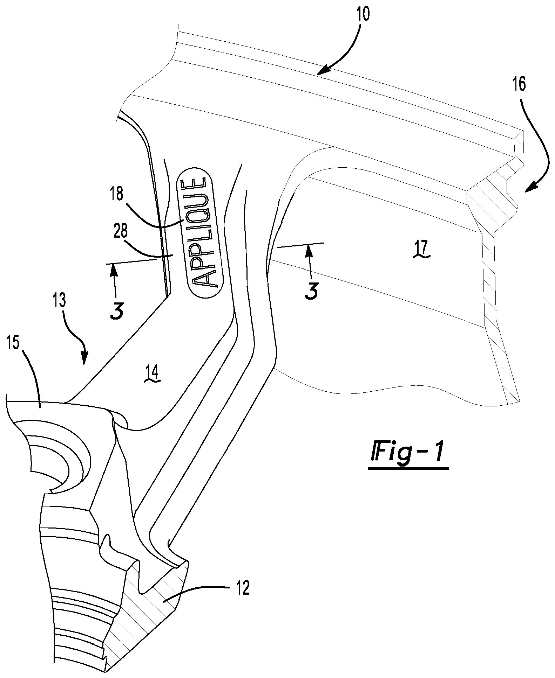

Referring to Figure 1, a partial perspective view of a wheel is generally shown at 10. The wheel 10 includes a formed wheel substrate 12 defining a face 13 and a rim portion 16. Spokes 14 extend between a central portion 15 of the face 13 and a bead 17 defined by the rim portion 16 that defines a periphery of the wheel 10. A decorative applique 18 is adhered to one of the spokes 14 presenting, in this embodiment, the brand identifier shown "APPLIQUE". It should be understood that the brand identifier shown in Figure 1 is merely exemplary and may be replaced by alternative identifiers or slogans, including but not limited to third party brands, wheel brands, customer brands, etc. In addition, the applique 18 may present a texture or patterns to the wheel that previously required complex tooling or machining to form into substrate 12 as will be explained further herein below.

By way of example, the applique 18 according to the present invention is contemplated to take many forms. In one embodiment, the applique 18 is a two-dimensional decal presenting brand names, patterns, slogans, and any number of alternatives and combinations. In an alternative embodiment, the applique 18 is a three-dimensional component that is painted, coated, chromed, or decorated in any manner that may be complementary to the wheel 10 or message being conveyed. The applique 18 is contemplated to include lettering or graphical features extending upwardly from a base for providing additional distinguishing characteristics. Additionally, the applique 18 is contemplated to include coloring that blends with a wheel 10 color or coloring that contrasts with the wheel 10 coloring. Additional distinguishing features are exhibited when the applique 18 is affixed to the wheel substrate 12 that presents an alloy background appearance to the applique 18 that will also be explained further hereinbelow.

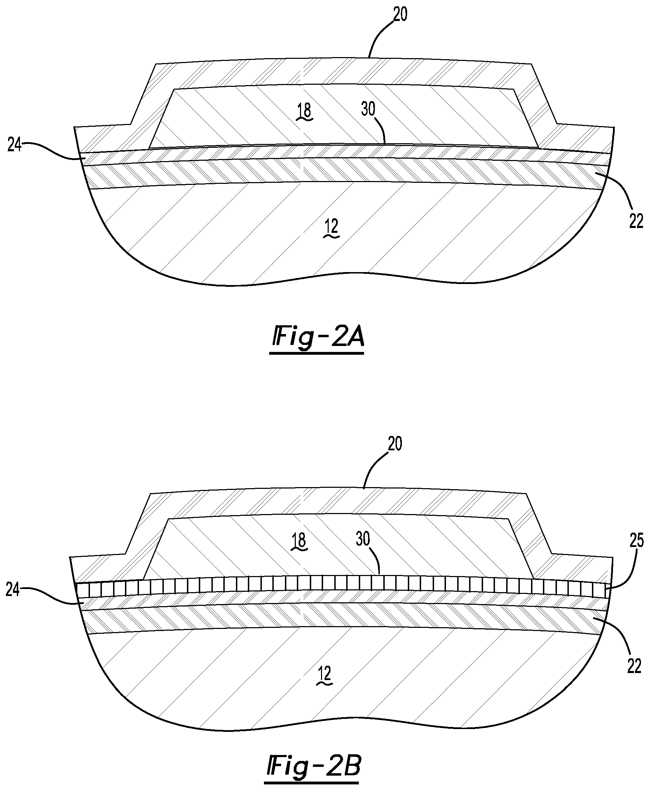

Referring now to Figures 2A and 2B, a first example shows the applique 18 affixed to the wheel 10. A polymeric over-coating 20 is applied over the wheel 10 and the applique 18 presenting a continuous polymeric surface extending over both the wheel 10 and the applique 18 as disclosed hereinabove. The polymeric over-coating 20 in one embodiment of the present invention is a clear coating presenting a consistent or same gloss level to the applique 18 and the wheel 10. In an alternative embodiment, the polymeric over-coating 20 is lightly pigmented or tinted uniformly providing depth or modified appearance to the wheel 10 and the applique 18. In a still further alternative embodiment, the polymeric over-coating 20 includes opalescent pigmentation providing an even further color shifting aesthetic enhancement to the applique 18. Further, the polymeric over-coating includes any of a powder coating, a urethane, or any polymeric coating capable of providing desirable durability to the applique 18 (and the wheel 10). The applique 18 is heat resistant to at least the temperature required to cure the polymeric over-coating 20 in an industrial paint bake oven. The polymeric over-coating 20 includes ultraviolet absorbers to deter breakdown of the polymer chains and provide further durability to the applique 18 by preventing ultraviolet degradation.

It should be understood that alternative coating techniques may be used to apply the clear coat or polymeric over-coat 20 over the applique 18. As set forth above, in one embodiment, the polymeric over-coat 20 is a powder coating. Alternatively, the polymeric over-coat 20 can be a one or two component urethane. After applying the polymeric over-coat 20 over the applique 18 and wheel 10, the wheel 10 is subject to a curing step in a bake oven or the like. Therefore, the applique 18 is capable of withstanding curing temperatures of the polymeric over-coat 20 that could exceed 280°F. Alternatively, the curing temperature of the polymeric over-coat 20 is adjusted to accommodate lower thermal limits of the applique 18.

A primer or base polymeric coating 22 is applied to the wheel 10 prior to adhering the applique 18 to the wheel 10. The base polymeric coating 22 provides durability to the wheel 10 by improving adhesion of the polymeric over-coatings 20 and inhibiting corrosion. According to the present invention, a first intermediate polymeric coating 24 is applied over the primer or base polymeric coating 22. The first intermediate polymeric coating 24 could provide a pigmented base color. As shown in Figure 2A, which represents a configuration which is not part of the claimed invention, the applique 18 may be adhered to the first intermediate polymeric coating 24. According to the present invention, as shown in Figure 2B, a protective or second intermediate polymeric coating 25 is applied over the first intermediate polymeric coating 24 prior to adhering the applique 18 to the wheel 10. The second intermediate polymeric coating 25 protects the first intermediate polymeric coating 24, provides additional durability to the wheel 10, and optimizes adhesion of the applique 18 to the wheel 10. The second intermediate polymeric coating 25 is transparent, but may include differing levels of pigmentation, dye, or tint to achieve desired aesthetics. It should also be understood that the second intermediate polymeric coating 25 may cover the entire first intermediate polymeric coating 24 or only portions of the first intermediate polymeric coating 24, such as an area under the applique 18, without varying the scope of the invention.

The second intermediate polymeric coating, in one embodiment, provides enhanced adhesion properties to the adhesive 30 used to bond the applique 18 to the wheel 10. It is further contemplated that the second intermediate polymeric coating 25, while clear or substantially clear provides less gloss than the upper coatings that cover the applique. According to the invention, the polymers used in the second intermediate polymeric coating 25 are not fully cured or cross-linked prior to adhering the applique 18 to the second intermediate polymeric coating 25 by way of the adhesive 30 to facilitate adhesions and cross-linking between the adhesive 30 and the second intermediate polymeric coating.

In a still further embodiment, the second intermediate polymeric coating 25 is subject to activation by way of atmospheric plasma treatment at least at the location the applique 18 is affixed as is disclosed in United States Patent Publications US 2017/0320080 A1 and US 2019/0233945 A1. Therefore, the energy level of the polymers comprising the second intermediate polymeric coating 25 can be raised and lowered to improve adhesion with the adhesive 30.

In a further alternative method, which does not form part of the present invention, the polymeric over-coat 20 may be cured by way of exposure to infrared (IR) light to accommodate lower thermal limits of the applique 18. IR curing techniques are sometimes used for "spot repairs" in automotive assembly plants. However, regular production IR curing has not previously been used for automotive components, such as, for example, vehicle wheels. IR curing provides the potential to apply the polymeric over-coat 20 over the entire wheel surface, or only locally over the applique 18 while "feathering" the IR cured coating into previously applied and cured over-coat 20 or the first or second intermediate polymeric coating 24, 25 onto which the applique 18 is placed.

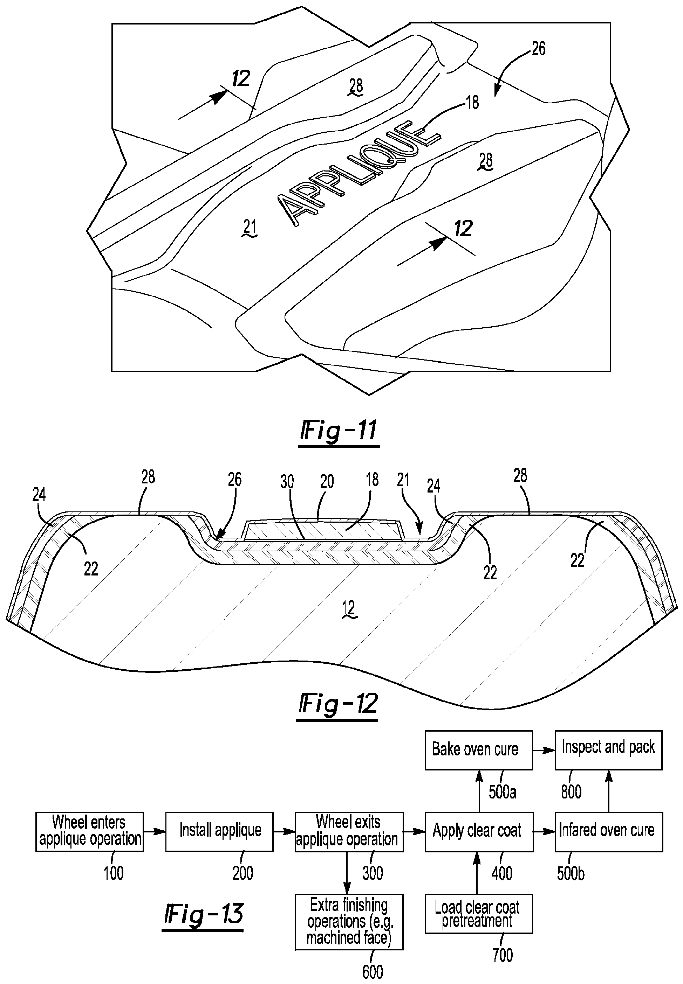

In a further embodiment, the wheel 10 may require additional cleaning and conversion after the applique 18 has been applied. In one embodiment, the applique 18 is applied to a mating portion 21 on a recessed surface 26 (as shown in Figure 11) that is spaced below an upper surface 28. The upper surface 28 is subsequently turned, machined, or milled to expose or reconfigure the face 13. In this embodiment, after turning, machining, or milling, the wheel 10 is subsequently cleaned and provided a conversion coating in a known manner. Alternatively, the wheel 10 may be subject to a localized dry plasma conversion as disclosed in above-mentioned publications US 2017/0320080 A1 and US 2019/0233945 A1. In either embodiment, the applique 18 is configured to withstand the additional processing without discernable degradation of appearance. It is contemplated by the inventors that subjecting the applique 18 to a conversion coating will also enhance adhesion of the polymeric over-coating 20 to the applique 18. Following cleaning and conversion, the various coatings are applied and the applique 18 is adhered as is described herein.

The applique 18 in one embodiment is a decal that is adhered to the wheel 10 with an adhesive 30. In another embodiment, the applique 18 is plastic or composite presenting a three-dimensional structure providing an appearance of depth to the applique 18 that also may be affixed to the wheel 10 with the adhesive 30. A snap or locating pin (not shown) may be included on a backside of the applique 18 to provide additional retention or assist locating the applique 18, if necessary. Alternatively, a template may be used to locate the applique 18 or backing paper or cover paper may be configured to locate the applique 18 and is subsequently removed after application. The adhesive 30 is selected for optimal adhesion to the second intermediate polymeric coating 25.

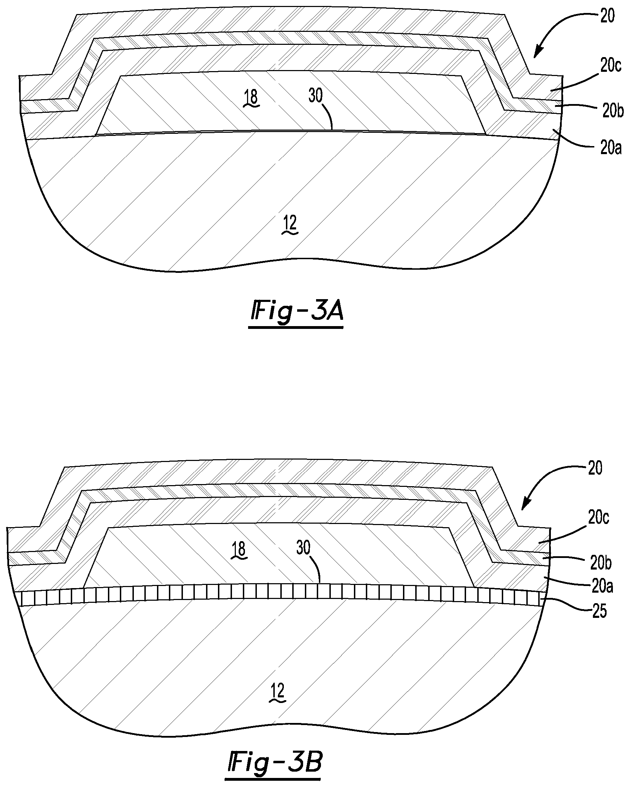

Figure 3A shows an alternative example where the applique 18 is adhered to the substrate 12 of the wheel 10 as is explained hereinabove. Prior to adhering the applique 18 to the wheel 10, the wheel 10 surface is cleaned and treated with at least one of a dry conversion coating or conventional conversion coating to improve adhesion of the applique 18 and of the polymeric over-coating 20 upon application. Alternatively, as shown in Figure 3B, the second intermediate polymeric coating 25 may be applied over the substrate 12 of the wheel 10 prior to adhering the applique 18 to the wheel 10. Here, the second intermediate polymeric coating 25 may also be a clear, transparent coating, or may include differing levels of pigmentation, dye, or tint to achieve desired aesthetics. In this embodiment, multiple polymeric over-coatings may be implemented. As in the first embodiment, a first polymeric over-coating 20a is applied over both the applique 18 and the wheel 10 (as shown in Figure 3A) or both the applique 18 and the second intermediate polymeric coating 25 (as shown in Figure 3B), presenting a continuous polymeric surface. A second polymeric over-coating 20b and a third polymeric over-coating 20c are sequentially applied. Each of the polymeric coatings 20a, 20b, 20c may be a clear, transparent coating or include differing levels of pigmentation, dye or tint to achieve different aesthetics or depth to the face 13 of the wheel 10 and to the applique 18. Further, only two layers of polymeric over-coating 20a, 20b may be applied over the applique 18 and the wheel 10 to provide differing levels of environmental protection, durability, and aesthetics.

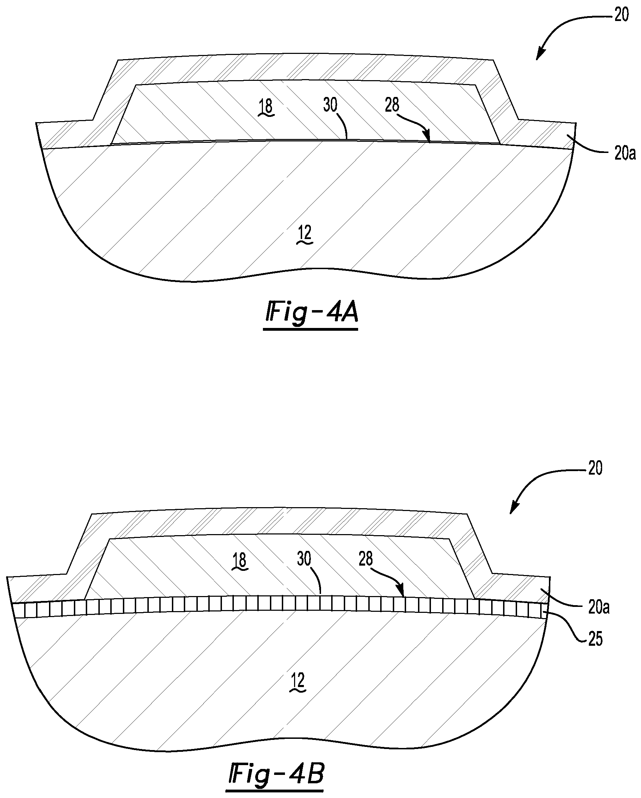

Figure 4A shows a still further alternative example where the applique 18 is adhered to the substrate 12 of the wheel 10 and only the first polymeric over-coating 20a is applied. Alternatively, as shown in Figure 4B, the applique 18 may be adhered to the second intermediate polymeric coating 25 covering the substrate 12 of the wheel 10, and only the first polymeric over-coating 20a is applied. The first polymeric over-coating 20a again presents a continuous polymeric surface of the applique 18 and the wheel 10. In this example, and in other examples where the applique 18 is adhered to the substrate 12 or to the second intermediate polymeric coating 25 covering the substrate 12, a previously applied polymeric coating may be mechanically removed from the wheel 10 prior to adhering the applique 18. The machined surface, in this embodiment the upper surface 28 of the face 13 (Figure 1), is subject to cleaning and either dry conversion or conventional conversion coatings to improve adhesion of the applique 18 and the first polymeric over-coating 20a.

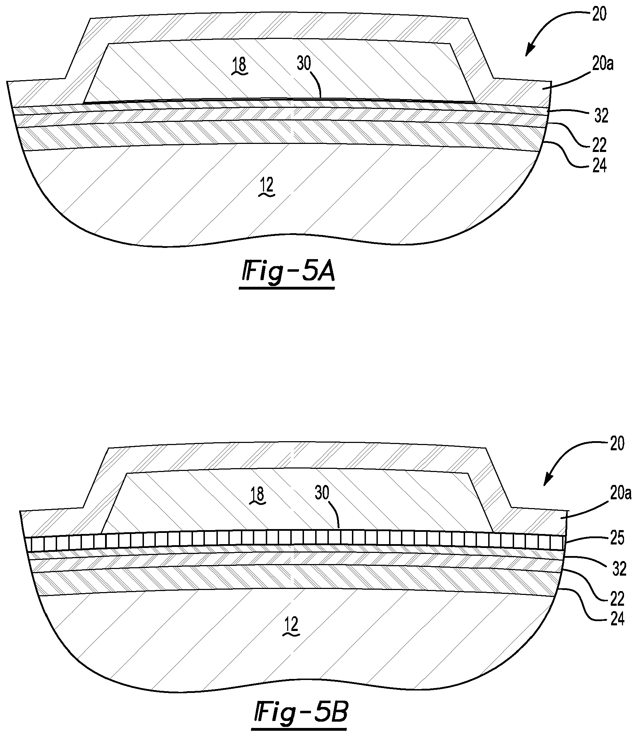

Figures 5A and 5B show a further example that includes a PVD metalized layer 32. As is known to those of skill in the art, PVD is a process for physical vapor deposition of metals and metal alloys on a wheel or polymeric coating of a wheel providing a metallic appearance. Therefore, this example includes the applique 18 being adhered directly to the PVD metalized layer 32 by way of the adhesive 30, as shown in Figure 5A. As such, it may be desirable to modify the adhesive 30 used to adhere the applique 18 to the PVD metalized layer 32 from that which is used to adhere the applique 18 to a polymeric coating. Prior to applying the PVD metalized layer 32, the base polymeric coating 22 is applied to the substrate 12 of the wheel 10. The first intermediate polymeric coating 24 is applied over the base polymeric coating 22 prior to the application of the PVD metalized layer 32 to achieved desired adhesion of the PVD metalized layer to the wheel 10. Therefore, the base polymeric coating 22, the first intermediate polymeric coating 24, and the PVD metalized layer 32 are applied in sequential order between the applique 18 and the wheel substrate 12. Alternatively, as shown in Figure 5B, the second intermediate polymeric coating 25 may be applied over the PVD metalized layer 32. The applique 18 is therefore adhered to the second intermediate polymeric coating 25 such that the base polymeric coating 22, the first intermediate polymeric coating 24, the PVD metalized layer 32, and the second intermediate polymeric coating 25 are applied in sequential order between the applique 18 and the wheel substrate 12.

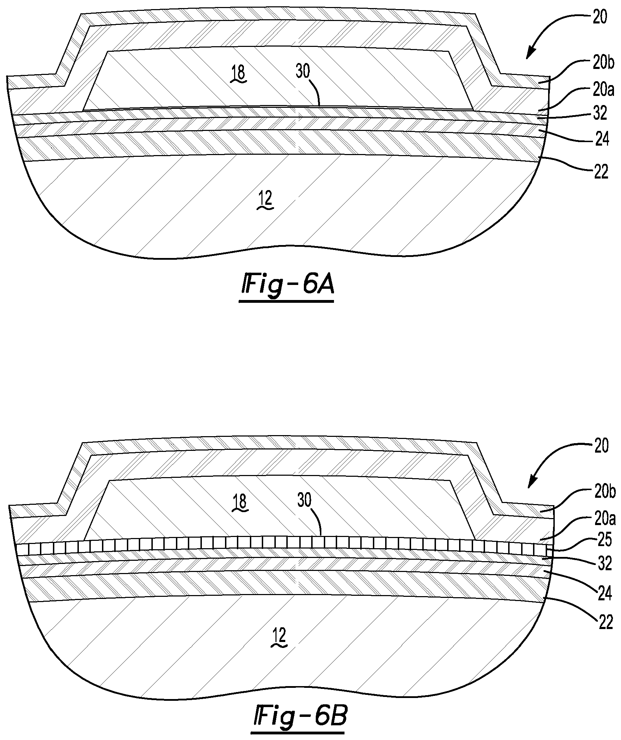

As shown in Figures 6A and 6B, a modified first polymeric over-coat 20a may be applied over the wheel 10 and a second polymeric over-coat 20b may be applied over the first polymeric over-coat 20a. In this respect, the wheels shown in Figures 6A and 6B are a modification of the wheels shown in Figures 5A and 5B that includes two polymeric over-coats 20a, 20b to achieve additional distinguishing visual characteristics. The applique 18 is adhered via the adhesive 30 to the PVD metalized layer 32 that has been deposited over the first intermediate polymeric coating 24 and the base polymeric coating 22, as shown in Figure 6A. In accordance with a further embodiment of the present invention, as shown in Figure 6B, the applique 18 may be adhered via the adhesive 30 to the second intermediate polymeric coating 25 covering the PVD metalized layer 32 that has been deposited over the first intermediate polymeric coating 24 and the base polymeric coating 22. The second polymeric over-coat 20b includes colorization by way of pigmentation or tint while maintaining translucence or transparency so that the applique 18 is visible. Alternatively, the gloss level of the second polymeric over-coat 20b is modified to a mid, low level, or matted gloss level to provide even different aesthetics. The first polymeric over-coat 20a may include no additional colorization and is substantially clear to illuminate the applique 18.

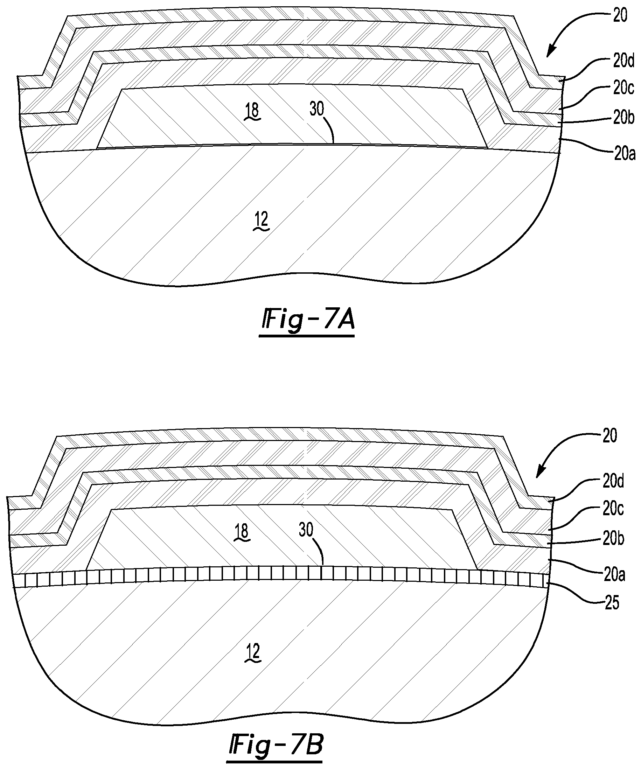

Figures 7A and 7B show a further example including the third polymeric over-coat 20c and a fourth polymeric over-coat 20d that are sequentially applied prior to the first polymeric over-coat 20a and the second polymeric over-coat 20b as set forth in Figures 6A and 6B. The multiple layers of polymeric over-coat 20a, 20b, 20c, and 20d achieve aesthetics provided in the embodiment shown in Figures 6A and 6B, including variants in gloss level, translucence, and colorization as explained hereinabove. However, in this example, the applique 18 is applied via the adhesive 30 directly to the wheel substrate 12, as shown in Figure 7A. Alternatively, as shown in Figure 7B, the applique 18 may be applied via the adhesive 30 to the second intermediate polymeric coating 25 directly covering the wheel substrate 12. The wheel substrate 12 in this example may be machined to provide a "bright shiny" surface to provide an even different aesthetic to the multiple layers of polymeric over-coat 20a, 20b, 20c, and 20d while these layers also provide enhanced durability to the wheel substrate 12 and the applique 18.

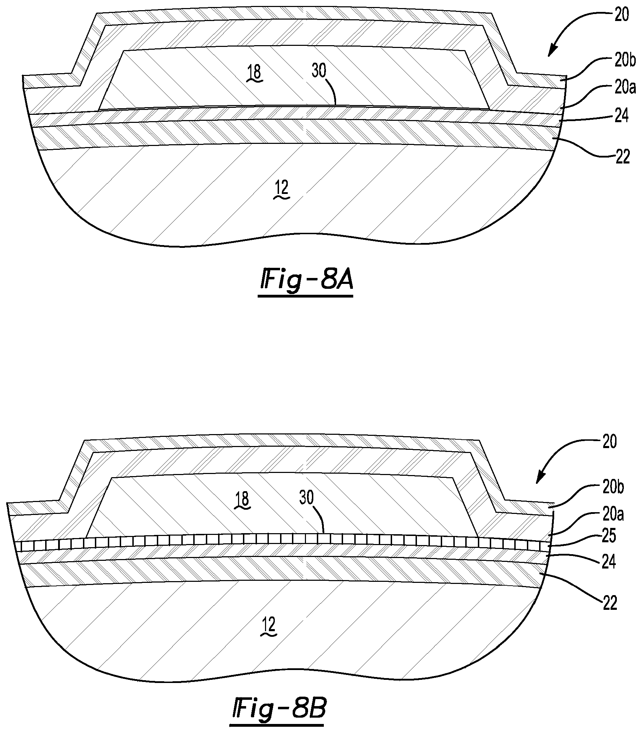

Figure 8A shows a further example where the applique 18 is adhered to the first intermediate polymeric coating 24. In accordance with the present invention, as shown in Figure 8B, the applique 18 is adhered to the second intermediate polymeric coating 25 covering the first intermediate polymeric coating 24. As in earlier embodiments, the first intermediate polymeric coating 24 is applied to the base polymeric coating 22 that is applied to the substrate 12 of the wheel 10. The first polymeric over-coating 20a is applied over the applique 18 and the first intermediate polymeric coating 24 (as shown in Figure 8A), or according to the invention, over the applique 18 and the second intermediate polymeric coating 25 (as shown in Figure 8B). The second polymeric over-coating 20b is then applied over the first polymeric over-coating 20a. As such, the aesthetic surrounding the applique 18 when adhered to the first intermediate polymeric coating 24 is modified by the interaction between the first polymeric over-coating 20a and the first intermediate polymeric coating 24 that may be pigmented with colored pigments or metallic flake to achieve unique reflective interaction with first and second polymeric over-coatings 20a, 20b.

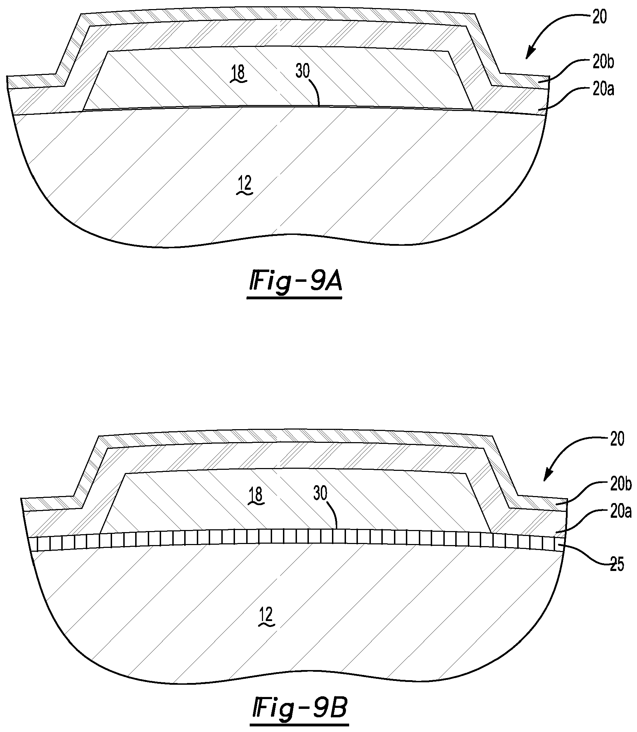

Figures 9A and 9B show a still further example in which the applique 18 is applied via the adhesive 30 to the substrate 12 of the wheel 10, or alternatively, to the second intermediate polymeric coating 25 covering the substrate 12 of the wheel 10. The first polymeric over-coat 20a is applied over the applique 18, followed by application of the second polymeric over-coat 20b that may include high, mid, or low gloss level, and includes pigmentation, dye, or other colorant while allowing at least some level of transparency. Therefore, additional alternative aesthetics of the applique 18 and of the surface of the substrate 12 are further modified.

It should be apparent to those of ordinary skill in the art after reading the disclosure set forth herein that unique and distinguishing aesthetics are achievable through the applique 18 of the present invention and by modifying the sequence and types of polymeric coatings and PVD metallic layers. Applying polymeric coatings over the applique 18 to achieve a continuous and polymeric or substrate 12 of the wheel 10 provides not only unique opportunities for alternative aesthetics presenting, when desired, an appearance that the applique is part of the wheel substrate 12, but also provides uniform and improved durability to the wheel 10.

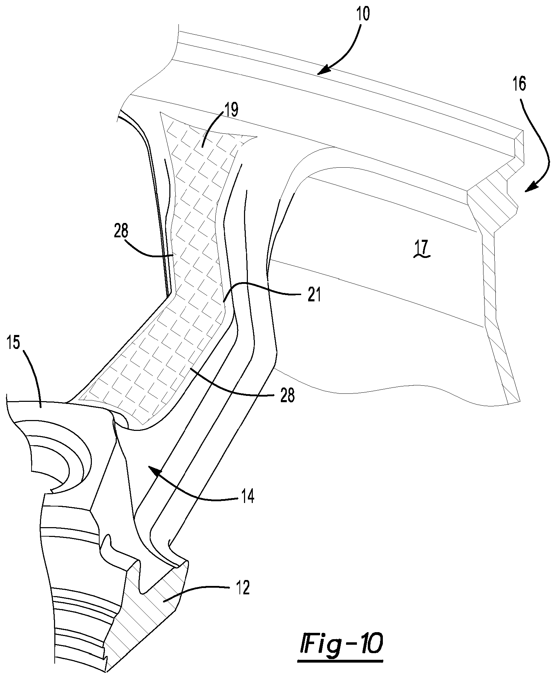

Figure 10 shows an alternative applique 19 presenting a textured surface to generate depth for a unique aesthetic appearance without a need for costly machining or tooling. While shown adhered to the mating portion 21, the applique 19 can be placed on any wheel surface to achieve the unique aesthetic. Further, any type of the coating combinations shown in Figures 2 through 9 may be used to alter the appearance of the alternative applique 19.

Referring now to Figure 13, a process flow diagram shows the steps which may be used for manufacturing the wheel of the present invention that incorporates the decorative applique 18. STEP 100, the wheel enters an applique 18 install station. STEP 200, the applique 18 is applied either to the wheel substrate 12, previously applied polymeric coatings 22, 24, 25, or PVD coating as required of the desired wheel appearance. The applique 18 is applied either manually, for low volume production, or robotically, for high volume production. STEP 300, the wheel exits the applique install station after the applique 18 has been adhered to the wheel either mechanically or by way of adhesive as described above. It should also be understood that the wheel is transferred between stations on a moving assembly line. Alternatively, the stations are modular and various methods of transfer are employed.

Following exit from the applique install station, alternative processing may take place, depending upon the desired appearance of the wheel. In one embodiment, STEP 600, the wheel is transferred to an extra processing cell where the wheel is subject to milling, machining, turning, or the like to reshape the wheel configuration or expose the substrate 12 after the applique 18 has been adhered. In this step, the applique is located in the mating portion 21 of the spoke 14 beneath the upper surface 28 to avoid being damaged during the milling or turning operation. It should be understood that while the present application discloses in detail locating the applique 18 on a spoke 14, the applique 18 could be located anywhere on the face 13 of the wheel, including but not limited to the central portion 15. Further, the applique 18 could also be located on the bead 17 defined by the rim portion 16. Following STEP 600, the wheel necessarily requires cleaning and application of a conversion coating, which is achieved in a pretreatment cell identified in STEP 700. Following the pretreatment cell, the wheel is transferred again to the clear polymeric over-coat cell identified as STEP 400 in Figure 13.

In an alternative, following applique application performed in STEP 300, the wheel is immediately transferred to the clear polymer coating cell identified as STEP 400. In both embodiments, the clear polymeric over-coat 20, as explained above, may include liquid or powder compositions or be formulated for infrared or heated curing. According to the invention, the clear polymer coating requires heat curing, the wheel is transferred to a bake oven identified as STEP 500a. In an alternative method which is not according to the invention, the clear polymer coating requires infrared curing, the wheel is transferred to an infrared curing cell identified as STEP 500b. After curing, the wheel is inspected and packed for shipping at STEP 800. It should be understood that the assembly process is completely flexible and adapted to have both heat curing and infrared curing on the same assembly line by making use of various transfer conveyor technologies. It should also be understood that the process steps could include a PVD metal application step in which the applique 18 is either adhered to the PVD metal, or the PVD metal coating is covered with a clear polymeric coating and the applique is adhered to the clear polymeric coating.

Obviously, many modifications and variations of the present invention are possible in light of the above teachings. The foregoing invention has been described in accordance with the relevant legal standards; thus, the description is merely exemplary than limiting in nature. Variations and modifications to the disclosed embodiment may become apparent to those skilled in the art and do come within the scope of this invention. Accordingly, the scope of a legal protection afforded this invention can only be determined by studying the following claims.

## Claims

1. A method of decorating a vehicle wheel (10), comprising the steps of:
forming a vehicle wheel (10) having an alloy substrate (12);
applying a primer polymeric coating (22) over said alloy substrate (12);
applying a first intermediate polymeric coating (24) over said primer polymeric coating (22);
applying a second intermediate polymeric coating (25) over said first intermediate polymeric coating (24) with said second intermediate polymeric coating (25) being a transparent coating;
providing an applique (18) including a decorative feature and adhering said applique (18) to said second intermediate polymeric coating (25) with an adhesive (30);
applying a first transparent polymeric coating (20, 20a) over said applique (18) and said second intermediate polymeric coating (25) thereby forming a continuous polymeric surface extending over said applique (18) and said second intermediate polymeric coating (25), and
curing said first transparent polymeric coating (20, 20a) in a paint bake oven, wherein said applique (18) is heat resistant to at least the temperature required to cure the first transparent polymeric coating (20, 20a),
wherein said second intermediate polymeric coating (25) being not fully cured or cross-linked prior to adhering the applique (18) to the second intermediate polymeric coating (25) by way of the adhesive (30).

2. The method set forth in claim 1, wherein said step of applying said first transparent polymeric coating (20, 20a) is further defined by presenting a same gloss level over said applique (18) and said wheel (10).

3. The method set forth in any of claims 1 or 2, wherein said step of applying said first transparent polymeric coating (20, 20a) is further defined by said transparent polymeric coating (20, 20a) being tinted.

4. The method set forth in any of claims 1 to 3, further including a step of applying a second transparent polymeric coating (20b) over said first polymeric coating (20a).

5. The method set forth in claim 4, wherein said step of applying said second transparent polymeric coating (20b) is further defined by applying a second polymeric coating being at least one of tinted, low gloss level, and mid gloss level.

6. The method set forth in any of claims 1 to 5, wherein said step of applying said applique (18) to said wheel (10) is further defined by applying a three-dimensional applique (18) to said wheel (10).

7. The method set forth in any of claims 1 to 6, further including a step of providing co-operable locating features on at least one of said wheel (10) and said applique (18) for locating said applique (18) on said wheel (10).

## Patentansprüche

1. Ein Verfahren zum Dekorieren eines Fahrzeugrads (10), aufweisend die Schritte von:
Bilden eines Fahrzeugrads (10), das ein Legierungssubstrat (12) hat;
Aufbringen einer Grundierungspolymerbeschichtung (22) über dem Legierungssubstrat (12);
Aufbringen einer ersten Zwischenpolymerbeschichtung (24) über der Grundierungspolymerbeschichtung (22);
Aufbringen einer zweiten Zwischenpolymerbeschichtung (25) über der ersten Zwischenpolymerbeschichtung (24), wobei die zweite Zwischenpolymerbeschichtung (25) eine transparente Beschichtung ist;
Bereitstellen einer Applikation (18) einschließlich eines dekorativen Merkmals und Kleben der Applikation (18) an die zweite Zwischenpolymerbeschichtung (25) mit einem Klebstoff (30);
Aufbringen einer ersten transparenten Polymerbeschichtung (20, 20a) über der Applikation (18) und der zweiten Zwischenpolymerbeschichtung (25), dadurch Bilden einer kontinuierlichen Polymeroberfläche, die sich über die Applikation (18) und die zweite Zwischenpolymerbeschichtung (25) erstreckt, und
Aushärten der ersten transparenten Polymerbeschichtung (20, 20a) in einem Farbbackofen, wobei die Applikation (18) hitzebeständig ist gegenüber mindestens der Temperatur, die erforderlich ist, um die erste transparente Polymerbeschichtung (20, 20a) auszuhärten,
wobei die zweite Zwischenpolymerbeschichtung (25) nicht vollständig ausgehärtet oder vernetzt ist vor dem Ankleben der Applikation (18) an die zweite Zwischenpolymerbeschichtung (25) mittels des Klebstoffs (30).

2. Das Verfahren gemäß Anspruch 1, wobei der Schritt des Aufbringens der ersten transparenten Polymerbeschichtung (20, 20a) weiter definiert ist durch Darstellen eines gleichen Glanzniveaus über der Applikation (18) und dem Rad (10).

3. Das Verfahren gemäß einem der Ansprüche 1 oder 2, wobei der Schritt des Aufbringens der ersten transparenten Polymerbeschichtung (20, 20a) weiter dadurch definiert ist, dass die transparente Polymerbeschichtung (20, 20a) gefärbt ist.

4. Das Verfahren gemäß einem der Ansprüche 1 bis 3, weiter einschließend einen Schritt des Aufbringens einer zweiten transparenten Polymerbeschichtung (20b) über der ersten Polymerbeschichtung (20a).

5. Das Verfahren gemäß Anspruch 4, wobei der Schritt des Aufbringens der zweiten transparenten Polymerbeschichtung (20b) weiter definiert ist durch Aufbringen einer zweiten Polymerbeschichtung, die mindestens eines von gefärbt, niedrigem Glanzniveau und mittlerem Glanzniveau ist.

6. Das Verfahren gemäß einem der Ansprüche 1 bis 5, wobei der Schritt des Aufbringens der Applikation (18) auf das Rad (10) weiter definiert ist durch Aufbringen einer dreidimensionalen Applikation (18) auf das Rad (10).

7. Das Verfahren gemäß einem der Ansprüche 1 bis 6, weiter einschließend einen Schritt des Bereitstellens von zusammen anwendbaren Lokalisierungsmerkmalen auf mindestens einem von dem Rad (10) und der Applikation (18) zum Lokalisieren der Applikation (18) auf dem Rad (10).

## Revendications

1. Un procédé de décoration d'une roue de véhicule (10), comprenant des étapes de :
formation d'une roue de véhicule (10) ayant un substrat en alliage (12) ;
application d'un revêtement polymère de primaire (22) sur ledit substrat en alliage (12) ;
l'application d'un premier revêtement polymère intermédiaire (24) sur ledit revêtement polymère de primaire (22) ;
l'application d'un second revêtement polymère intermédiaire (25) sur ledit premier revêtement polymère intermédiaire (24), ledit second revêtement polymère intermédiaire (25) étant un revêtement transparent ;
la mise en place d'une vignette (18) comprenant un motif décoratif et l'adhésion de ladite vignette (18) sur ledit second revêtement polymère intermédiaire (25) au moyen d'un adhésif (30) ;
l'application d'un premier revêtement polymère transparent (20, 20a) sur ladite vignette (18) et ledit second revêtement polymère intermédiaire (25), en formant ainsi une surface polymère continue s'étendant sur ladite vignette (18) et ledit second revêtement polymère intermédiaire (25), et
le durcissement dudit premier revêtement polymère transparent (20, 20a) dans un four de cuisson de peinture, ladite vignette (18) étant résistante à la chaleur au moins jusqu'à la température requise pour durcir le premier revêtement polymère transparent (20, 20a), ledit second revêtement polymère intermédiaire (25) n'étant pas totalement durci ou réticulé avant de faire adhérer la vignette (18) au second revêtement polymère intermédiaire (25) au moyen de l'adhésif (30).

2. Le procédé énoncé dans la revendication 1, dans lequel ladite étape d'application dudit premier revêtement polymère transparent est en outre définie par le fait qu'il présente un même niveau de brillance sur la vignette (18) et ladite roue (10).

3. Le procédé énoncé dans l'une des revendications 1 ou 2, dans lequel ladite étape d'application dudit premier revêtement polymère transparent (20, 20a) est en outre définie par le fait que ledit revêtement polymère transparent (20, 20a) est coloré.

4. Le procédé tel qu'énoncé dans l'une des revendications 1 à 3, comprenant en outre une étape d'application d'un second revêtement polymère transparent (20b) sur ledit premier revêtement polymère (20a).

5. Le procédé tel qu'énoncé dans la revendication 4, dans lequel ladite étape d'application dudit second revêtement polymère transparent (20b) est en outre définie par l'application d'un second revêtement polymère qui est au moins un parmi : coloré, à faible niveau de brillance, et à niveau moyen de brillance.

6. Le procédé tel qu'énoncé dans l'une des revendications 1 à 5, dans lequel ladite étape d'application de ladite vignette (18) sur ladite roue (10) est en outre définie par l'application d'une vignette tridimensionnelle (18) sur ladite roue (10).

7. Le procédé tel qu'énoncé dans l'une des revendications 1 à 6, comprenant en outre une étape de mise en place de singularités d'alignement coopérantes sur au moins l'une d'entre ladite roue (10) et ladite vignette (18) pour aligner ladite vignette (18) sur ladite roue (10).
